# EUROPÄISCHE PATENTSCHRIFT

(11) **EP 0 819 374 B1**
(45) Veröffentlichungstag und Bekanntmachung des Hinweises auf die Patenterteilung: **02.05.2001**
(21) Anmeldenummer: 97110716.4
(22) Anmeldetag: 01.07.1997
(51) Int. Cl.: A01F 15/08

(54) **Antriebssystem für landwirtschaftliche Grossballenpresse**
Gear drive for big balers
Système d'entraînement pour presse à grandes balles

(30) Priorität: 16.07.1996 DE 19628604
(43) Veröffentlichungstag der Anmeldung: 21.01.1998
(73) Patentinhaber: Usines Claas France S.A., 57140 St. Remy / Woippy (FR)
(72) Erfinder: Hawlas, Martin, 33428 Harsewinkel (DE); Nonhoff, Ansgar, 48653 Coesfeld (DE); Scholz, Egbert, 33378 Rheda (DE)
(74) Vertreter: Weeg, Thomas

(56) Entgegenhaltungen:
- DE-U- 9 211 256
- US-A- 4 615 238

## Beschreibung

Die Erfindung betrifft ein Antriebssystem für eine landwirtschaftliche Großballenpresse mit einer Einrichtung zum Aufnehmen von Erntegut vom Feld, einer Einrichtung zum Weitertransport des Erntegutes zu einer Preßkammer, einer Preßkammer, einer Bindeeinrichtung sowie einer Abgabeeinrichtung zur Abgabe des fertig gebundenen Ballens, wobei das Antriebssystem ein Getriebegehäuse aufweist, dessen Eingangsseite über eine Welle mit einer Zapfwelle verbindbar ist und dessen Ausgänge mit Arbeitskomponenten der Großballenpresse antriebsverbunden sind, indem im Antriebsstrang zwischen der Zapfwelle des Schleppers und einer Eingangswelle in das Getriebegehäuse der Großballenpresse ein Vorschaltgetriebe angeordnet ist, das eingangsseitig mit der Zapfwelle und ausgangsseitig mit einer Gelenkwelle zur Eingangswelle des Getriebegehäuses antriebsverbunden ist.

Eine Großballenpresse ist beispielsweise aus der Schrift DE 92 06 232 bekannt. Die dort gezeigte Großballenpresse verfügt über eine zwischen dem Schwungrad und dem Getriebegehäuse angeordnete Einrichtung zum selbsttätigen Unterbrechen und Wiedereinschalten des Antriebsstranges, um die Komponenten der Großballenpresse vor einer Überlastung zu schützen. Wird der Antriebsstrang in einer gattungsgemäßen Großballenpresse unterbrochen oder die Zapfwelle des Schleppers angehalten, um die Arbeitsorgane der Großballenpresse zu stoppen, ergibt sich der Nachteil, daß neben den mechanischen Antrieben, die die Antriebskraft über beispielsweise Zahnräder, Wellen und Ketten übertragen, auch die hydraulischen Antriebe beispielsweise für die Auf- und Abwärtsbewegung der Aufnahmeeinrichtung, für die Preßraumweitenverstellung, die Öffnung der Heckklappe bei einer Rundballenpresse, der Ballenausdrücker, die Ballenschurre oder die Bindeeinrichtung gestoppt sind, da die Hydraulikpumpen regelmäßig am Getriebegehäuse der Ballenpresse oder diesem nachgeordnet angebracht sind und nach dem Abschalten keine Antriebsleistung mehr erhalten. Aus der US 2,676,532 ist es bekannt, eine Hydraulikpumpe nahe zum Schlepper anzuordnen und über einen Keilriemen anzutreiben. Eine solche Ausgestaltung des Antriebs hat jedoch den Nachteil, schmutzempfindlich und wartungsintensiv zu sein. Seltener erfolgt die Hydraulikversorgung über den Schlepper, wobei sich dann Verschmutzungsprobleme durch die Steckkupplungen ergeben. Teilweise sind dann Hydraulikdruckspeicher auf der Ballenpresse oder Einrichtungen für eine Nothydraulik erforderlich, die teuer sind und gewartet werden müssen.

Aus der US 4,615,238 ist es bekannt, das Getriebegehäuse einer Ballenpresse so auszugestalten, dass eine der Ausgangswellen des Getriebegehäuses in einem spitzen Winkel zur Eingangswelle liegt. Ein sich aus dem Stand der Technik insbesondere für Großballenpressen ergebender Nachteil besteht jedoch darin, daß die Eingangswelle des Getriebegehäuses regelmäßig höher angeordnet ist als der Antriebsstummel der Zapfwelle, weshalb die Gelenkwelle, die die Antriebskraft von der Zapfwelle zur Eingangswelle des Getriebegehäuses überträgt, während des Betriebs der Ballenpresse schräg mit Knickwinkeln an den Gelenkstellen angeordnet werden muß. Durch eine solche Anordnung wird das Knickpotential der Gelenkwelle teilweise verbraucht, an den Gelenken ergibt sich ein höherer Verschleiß und der Kraftfluß ist nicht optimal. Hierin ist der entscheidende Nachteil der aus dem Stand der Technik für Großballenpressen bekannten Kraftübertragungen zu sehen. Auch sind unterschiedliche Maschinendrehzahlen und eventuell auch ein Reversieren bei den bekannten Antriebssystemen nicht einfach zu realisieren. Aus der DE 19 36 188, die eine gattungsgemäßen Ballenpresse offenbart, ist es bekannt, ein Zwischensteckgetriebe zu verwenden, das auf zweierlei Art zwischen die Antriebswellen gesteckt werden kann, um jeweils Drehzahlen von 540 bzw. 1.000 U/min. für den Antrieb einer landwirtschaftlichen Maschine nutzen zu können. Die Nachteile des vorgeschlagenen Steckgetriebes bestehen darin, keine Anschlußmöglichkeit für eine Hydraulikpumpe vorzusehen und die Gelenkwelle nicht optimal ausrichten zu können.

Es ist die Aufgabe der vorliegenden Erfindung, das Antriebssystem für eine landwirtschaftliche Großballenpresse zu verbessern, indem die vorbeschriebenen Nachteile ganz oder teilweise vermieden werden.

Die Aufgabe wird gelöst, in dem Vorschaltgetriebe zumindest ein Kegeltrieb mit Winkelversatz angeordnet ist. Diese Anordnung erlaubt es, den Höhenversatz zwischen Zapfwelle und Eingangswelle eines Getriebes der Großballenpresse durch den Winkelversatz des Kegeltriebes auszugleichen und so eine optimale Ausrichtung der Gelenkwelle zu erreichen. Zwischen Zapfwelle und Vorschaltgetriebe kann zumindest eine weitere Gelenkwelle angeordnet sein, um eine optimale Einbaulage und eine größere Knickwinkelfähigkeit zu erhalten.

Eine Abtriebswelle des Vorschaltgetriebes kann mit einer Antriebswelle einer Hydraulikpumpe antriebsverbunden sein. Ein Vorteil einer solchen Anordnung liegt in einer guten Zugänglichkeit der Hydraulikpumpe im Falle von Reparaturen und Wartung. Viel wichtiger ist jedoch, bei einer solchen Anordnung jedoch, die Möglichkeit zu haben, den Arbeitsdruck im Hydrauliksystem aufrechterhalten zu können, obwohl Kupplungseinrichtungen in nachgeordneten Antriebssträngen aufgrund Überlast oder aus sonstigen Gründen den Kraftfluß unterbrochen haben. In bevorzugter Ausgestaltung entspricht die Eingangswelle des Vorschaltgetriebes der Antriebswelle der Hydraulikpumpe, in diesem Fall werden beide Funktionen Eingangswelle des Vorschaltgetriebes und Antriebswelle der Hydraulikpumpe von einer Eingangswelle abgedeckt. Voraussetzung ist jedoch, daß zumindest eine Abschaltkupplung dem Vorschaltgetriebe nachgeordnet ist, um nicht beim Ansprechen der Abschaltkupplung die Antriebskraft für den Hydraulikkreislauf zu verlieren. Dabei spielt es dann keine Rolle, ob die Abschaltkupplung dem Schwungrad, dem Preßkolben, einer Förder- oder Schneideinrichtung oder sonstigen Komponenten einer Großballenpresse zugeordnet ist.

In weiterer Ausgestaltung der Erfindung verfügt das Vorschaltgetriebe über mehr als eine Übersetzungsstufe. Dadurch ist es möglich, die Großballenpresse mit anderen Drehzahlen als nur 1.000 U/min, anzutreiben. So kann es beispielsweise wünschenswert sein, die Großballenpresse bei der Verarbeitung von trockenem Gras schneller laufen zu lassen, beispielsweise mit 1.200 U/min., um die Kapazität der Großballenpresse besser auslasten zu können. Eine höhere Drehzahl der Gelenkwelle über 1.000 U/min. bewirkt zudem eine höhere Schwungenergie des Schwungrades, wobei die Drehzahl hinter dem Schwungrad durch geeignete Übersetzungen wieder reduziert werden kann. Andererseits kann es unter bestimmten Bedingungen, beispielsweise in schwerer Silage, vorteilhaft sein, über eine Übersetzung zu verfügen, bei der die Drehzahl der Gelenkwelle unter 1.000 U/min. liegt, beispielsweise bei 850 U/min.. Auch wäre es wünschenswert, den Antrieb der Großballenpresse reversieren zu können, um Verstopfungen beispielsweise in der Schneideinrichtung oder im Förderkanal zu beseitigen. Dies wäre möglich, wenn einer der Gänge des Vorschaltgetriebes die Gelenkwelle in anderer Richtung dreht als einer oder mehrere andere Gänge des Vorschaltgetriebes. Beim Reversieren des Antriebs der Großballenpresse müßte natürlich der Freilauf des Schwung-rades auf an sich bekannte Weise gesperrt werden, um die umgekehrte Antriebskraft auf die nachgeordneten Arbeitsorgane der Großballenpresse übertragen zu können.

Im Vorschaltgetriebe kann zudem ein Planetengetriebe angeordnet sein. Der Vorteil eines dort angeordneten Planetengetriebes, bei dem durch einen zweiten Antrieb wie beispielsweise einem Hydraulik- oder Elektromotor, der seine Antriebskraft in das Planetengetriebe einleitet, liegt darin, daß die Abtriebsdrehzahl des Vorschaltgetriebes stufenlos variabel ist, je nach Auslegung auch in Vorwärts- und Rückwärtsrichtung. Außerdem kann ein Planetengetriebe klein gebaut werden, da die Antriebskräfte über mehrere Planetenräder verteilt übertragen werden.

In bevorzugter Ausgestaltung ist das Vorschaltgetriebe von Ferne aus schaltbar. Die Schaltbetätigung kann elektronisch über eine Bedieneinheit, die die Bediensignale über Kabel, Ultraschall, Infrarot oder andere Mittel an eine Schaltaktorik übermittelt, mechanisch, hydraulisch oder eine Kombination dieser Betätigungsmöglichkeiten erfolgen.

Falls man entweder den erhöhten Verschleiß der Gelenkwelle mit nicht optimaler Anordnung bei einem Höhenversatz zwischen Zapfwelle und Eingangswelle zu einem Getriebe der Großballenpresse in Kauf nehmen will oder der Höhenversatz nur in geringem Maße oder überhaupt nicht vorliegt, kann man auf den Kegeltrieb mit Winkelversatz verzichten und statt dessen ein Vorschaltgetriebe verwenden, das aus mindestens einer Zahnradstufe mit ineinanderkämmenden Zahnrädern besteht. Eine solche Anordnung kann dann mit den kennzeichnenden Merkmalen der Ansprüche 3 bis 9 kombiniert werden, um die sich aus dem Stand der Technik ergebenden Nachteile zu überwinden. Bei einer solchen Anordnung kann eine Hydraulikpumpe über eine Zahnradstufe oder über die Verlängerung einer Welle angetrieben sein.

Um eine hohe Variabilität der möglichen Übersetzungsstufen zu erreichen, wird weiter vorgeschlagen, das Vorschaltgetriebe lösbar im Antriebsstrang anzuordnen, um Vorschaltgetriebe mit unterschiedlichen Übersetzungsstufen gegeneinander austauschen zu können. Auch im Reparaturfall bleibt die Großballenpresse dadurch vor größeren Ausfallzeiten verschont.

Die Erfindung wird nun anhand verschiedener Ausführungsbeispiele näher erläutert. Es zeigen:
- Figur 1: eine landwirtschaftliche Großballenpresse in Form einer Quader- ballenpresse in der Seitenansicht,
- Figur 2: eine landwirtschaftliche Großballenpresse in Form einer Rund- ballenpresse in der Seitenansicht,
- Figur 3: eine schematische Darstellung eines erfindungsgemäßen Winkeltriebs mit Drehsinnumkehr,
- Figur 4: eine schematische Darstellung eines erfindungsgemäßen Winkeltriebs mit gleichsinnigem Antrieb,
- Figur 5: zeigt ein Vorschaltgetriebe mit einem Planetengetriebe.

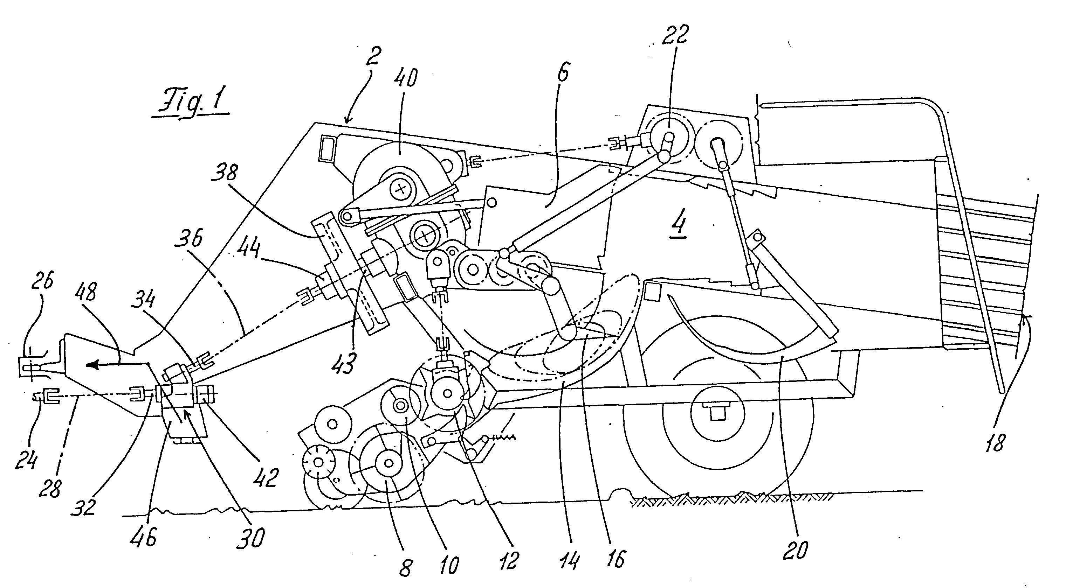

In Figur 1 ist eine landwirtschaftliche Großballenpresse 2 zu sehen, die eine Ballenpreßkammer 4 mit einem darin hin- und herbeweglichen Preßkolben 6 aufweist. Unterhalb des Getriebegehäuses ist eine Aufnahmevorrichtung 8 angeordnet, die das Erntegut vom Boden aufnimmt und durch seitliche Förderschnecken 10 mittig zusammengeführt der Schneidvorrichtung 12 zuführt. Von dort aus wird das Erntegut in den Förderkanal 14 weiterbefördert, wo es gesammelt und von der Fördereinrichtung 16 als eine Aufgabeportion in die Ballenpreßkammer 4 geworfen wird, wenn der Kolben 6 im Laufe seiner zyklischen Bewegungen die Zuführöffnung zur Ballenpreßkammer 4 freigibt. In der Ballenpreßkammer 4 wird die zugeführte Aufgabeportion durch die Hubbewegung des Preßkolbens 6 gegen das zuvor gepreßte Gut gedrückt, dabei verdichtet und schließlich mit dem zuvor gepreßten Gut in Richtung des Abgabeendes 18 der Ballenpreßkammer 4 geschoben. Auf ein Auslösesignal befördert die Bindenadel 20 mit einer Schwenkbewegung das Bindegarn durch den Ballenstrang hindurch zur Bindeeinrichtung 22, in der das Bindegarn geschnitten und geknotet wird. Der fertig geknotete Ballen kann dann über das Abgabeende 18 auf das Feld rutschen.

Für die Erfindung spielt es dabei keine Rolle, ob eine Schneideinrichtung 12 vorhanden ist oder ob die Fördereinrichtung 16 auf die beschriebene oder auf andere aus dem Stand der Technik bekannte Weise, beispielsweise als Rotationsförderer, arbeitet oder ob mehrere Förderer vorhanden sind oder ob die Fördereinrichtung eine oder mehrere Hubbewegungen während eines Preßhubes des Kolbens 6 ausführt. Maßgeblich ist, daß die beschriebenen Organe für ihre Funktion auf ein Antriebssystem angewiesen sind.

Das Antriebssystem nimmt in Figur 1 die Antriebskräfte von der Zapfwelle 24 eines Schleppers ab, an die Großballenpresse 2 über eine Anhängevorrichtung 26 angehängt ist. Auf die Zapfwelle 24 ist eine Gelenkwelle 28 aufgesteckt, die in das Vorschaltgetriebe 30 mündet. Das Vorschaltgetriebe 30 besteht aus einer Eingangswelle 32 und einer Ausgangswelle 34, die mit der Gelenkwelle 36 antriebsverbunden ist. An der Gelenkwelle 36 ist das Schwungrad 38 sowie daran anschließend das Getriebegehäuse 40 mit der Getriebeeingangswelle 43 angeordnet. Vom Getriebegehäuse 40 aus werden dann alle mechanischen Komponenten der Großballenpresse 2 angetrieben. Es ist deutlich erkennbar, daß die Eingangswelle 32 und die Ausgangswelle 34 in einem Winkel zueinander stehen, der durch einen Kegeltrieb mit Winkelversatz ermöglicht ist, der im Vorschaltgetriebe 30 angeordnet ist. Auf das Vorschaltgetriebe 30 aufgesetzt ist eine Hydraulikpumpe 42, deren Zulauf- und Ablaufleitungen nicht näher dargestellt sind, mit der aber verschiedene hydraulisch betätigte Funktionen wie beispielsweise das Anheben und Absenken der Aufnahmevorrichtung 8, ein Ballenausdrücker, die Preßraumeinschnürung oder die Höhenverstellung der Ballenschurre antreibbar sind. Dem Fachmann ist erkennbar, daß die Hydraulikpumpe 42 antriebsmäßig direkt mit der Eingangswelle 32 verbunden ist. Im Schwungrad 38 ist eine Abschaltkupplung 44 angeordnet, die bei Überlastung des nachgeordneten Antriebssystems die Antriebsverbindung zwischen der Gelenkwelle 36 und der Eingangswelle 43 unterbricht und das Antriebssystem so vor Schäden schützt. Im Vorschaltgetriebe 30 können mehrere Gänge, unter anderem auch ein Rückwärtsgang, untergebracht sein, auch kann sich im Vorschaltgetriebe 30 ein Planetengetriebe befinden. Im Vorschaltgetriebe 30 befindet sich eine Schaltbox 46, in der eine bewegliche Schaltgabel angeordnet ist, die von einem Elektromotor betätigt wird. Der Elektromotor übermittelt die Positionswerte der Schaltgabel über ein Kabel 48 an eine Bedienbox auf dem Schlepper, von der aus auch Stellbefehle an die Schaltbox über das Kabel 48 übertragen werden. Die elektronische Kommunikation der Daten kann über ein CAN-Busnetz erfolgen.

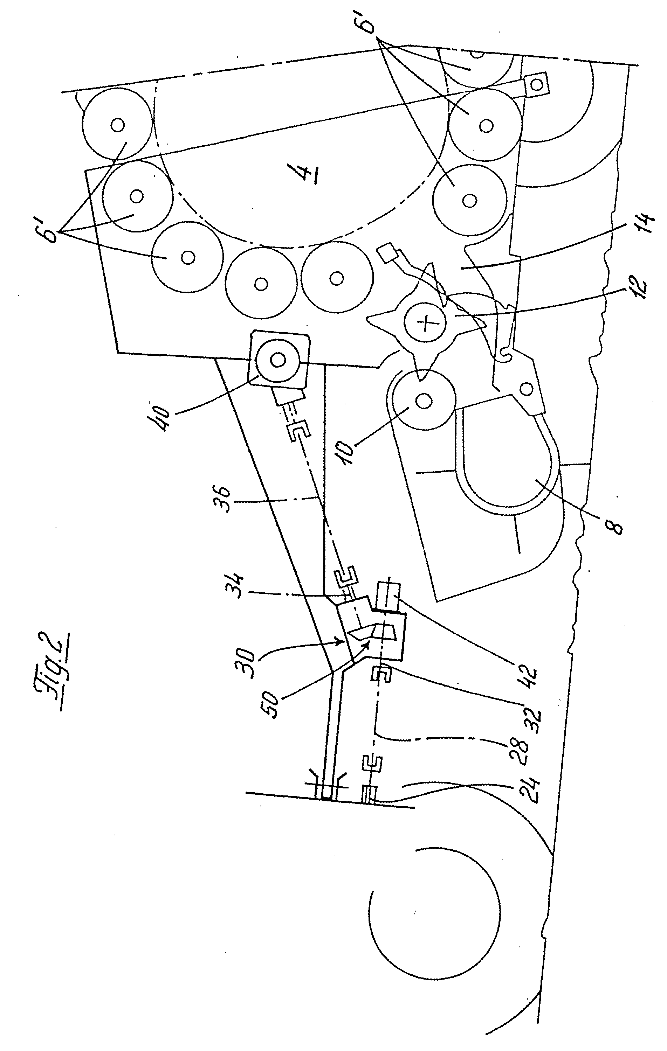

In Figur 2 ist eine landwirtschaftliche Großballenpresse 2 in Form einer Rundballenpresse zu sehen, die in einer Ballenpreßkammer 4 mittels die Ballenpreßkammer umfangsseitig umgrenzender drehbar gelagerter Walzen 6' das zugeförderte Erntegut zu einem Ballen verpressen. Das Erntegut wird von einer Aufnahmevorrichtung 8 vom Boden aufgehoben, mittig durch Förderschnecken 10 zusammengeführt und der Schneideinrichtung 12 zugefördert. Von dort aus wird es durch einen Förderkanal 14 in die Ballenpreßkammer 4 weiterbefördert. Der Antrieb der Großballenpresse 4 erfolgt von der Zapfwelle 24 des Schleppers aus über eine Gelenkwelle 28 zur Eingangswelle 32 des Vorschaltgetriebes 30, das die Antriebskraft über einen Kegeltrieb 50 mit Winkelversatz auf die Ausgangswelle 34 überträgt. Auf die Eingangswelle 32 ist die Hydraulikpumpe 42 aufgesetzt. Die Antriebskraft wird von der Ausgangswelle 34 über eine Gelenkwelle 36 in das Getriebegehäuse 40 übertragen, in dem eine nicht näher dargestellte Abschaltkupplung integriert ist. Die Funktionsweise des Vorschaltgetriebes entspricht demjenigen in Figur 1.

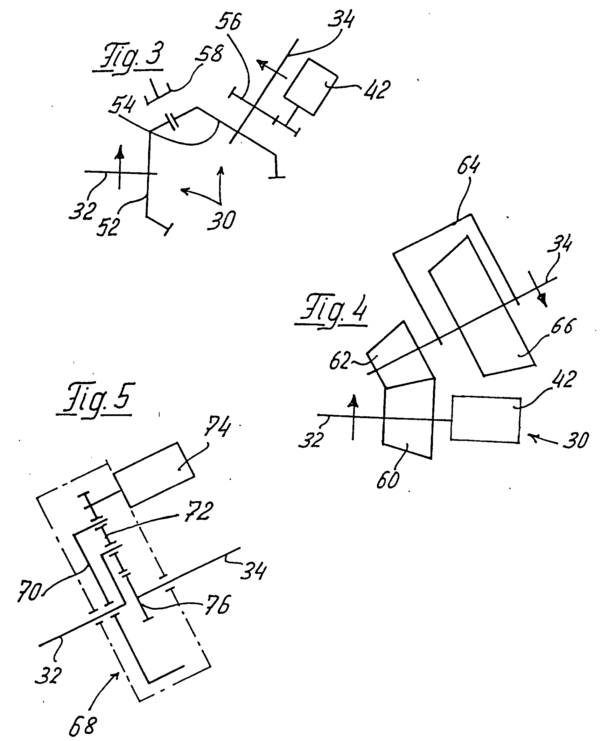

In Figur 3 ist ein schematisch dargestelltes Vorschaltgetriebe 30 zu sehen. Auf der Eingangswelle 32 ist ein Tellerrad 52 befestigt, das mit einem drehfest auf der Ausgangswelle 34 befestigten Tellerrad 54 in Eingriff steht. Die Drehbewegung der Eingangswelle 32 wird so in gleicher Drehrichtung auf die Ausgangswelle 34 übertragen. Eine Hydraulikpumpe 42 wird in Figur 3 über einen mit der Ausgangswelle 34 antriebsverbundenen Zahnradsatz 56 angetrieben. Eine Drehrichtungsumkehr kann mit diesem Vorschaltgetriebe 30 erreicht werden, indem zwischen die Tellerräder 52, 54 ein Zahnrad 58 geschaltet wird, was beispielsweise im Stillstand der Großballenpresse, aber auch während der Fahrt mittels einer manuell oder automatisch ausgelösten Kupplung vorgenommen werden kann.

In Figur 4 ist eine Version des Vorschaltgetriebes 30 zu sehen, bei der zwei drehfest auf den Wellen 32, 34 angebrachte Zahnräder 60, 62 ineinanderkämmen und so die Antriebskraft übertragen. Bei dieser Version erfolgt eine Drehsinnumkehr. An die Eingangswelle 32 ist eine Hydraulikpumpe 42 angeschlossen. Eine Schaltung zwischen zwei Gängen kann erfolgen, indem von einem Schaltgestänge 64 die Ausgangswelle 34 in eine solche Position bewegt wird, daß das kleinere Zahnrad 62 (oder größere Zahnrad 66) mit dem Zahnrad 60 in Eingriff gelangt und so eine unterschiedliche Übersetzung im Verhältnis zum Zahnrad 62 erreicht wird.

In Figur 5 ist ein Ausführungsbeispiel unter Verwendung eines Planetengetriebes 68 dargestellt. Die Eingangswelle 32, die direkt oder indirekt über einen Kegeltrieb die Antriebskraft von einer Zapfwelle abnimmt, ist mit dem Steg der Planetenräder 72 des Planetengetriebes 68 antriebsverbunden. Das Hohlrad 70, das drehbar auf der Eingangswelle 32 gelagert ist, weist eine Innenverzahnung auf, die mit der Verzahnung der Planetenräder 72 ineinanderkämmt, sowie eine Außenverzahnung, auf die die Zapfwelle 74 einwirkt und durch Variation der Drehzahl der Zapfwelle 74 gleichzeitig die Drehzahl der Abtriebswelle 34 varriert, die drehfest mit dem Sonnenrad 76 verbunden ist. Im Regelfall wird der Antrieb 74 stillgesetzt sein, in bevorzugter Ausführung ist er vorwärts und rückwärts antreibbar, wodurch ein Reversieren des Antriebs der Großballenpresse möglich ist. Der Antrieb 74 kann mit einer Sperrklinke ausgestattet sein, um Blindleistung durch passives Drehen des Antriebs 74 zu verhindern.

## Patentansprüche

1. Antriebssystem für eine landwirtschaftliche Großballenpresse mit einer Einrichtung zum Aufnehmen von Erntegut vom Feld, einer Einrichtung zum Weitertransport des Erntegutes zu einer Preßkammer, einer Preßkammer, einer Bindeeinrichtung sowie einer Abgabeeinrichtung zur Abgabe des fertig gebundenen Ballens, wobei das Antriebssystem ein Getriebegehäuse (40) aufweist, dessen Eingangsseite über eine Welle mit einer Zapfwelle (25) verbindbar ist und dessen Ausgänge mit Arbeitskomponenten der Großballenpresse antriebsverbunden sind, in dessen Antriebsstrang zwischen der Zapfwelle des Schleppers und einer Eingangswelle (43) in das Getriebegehäuse (40) der Großballenpresse ein Vorschaltgetriebe angeordnet ist, das eingangsseitig mit der Zapfwelle und das ausgangsseitig mit einer Gelenkwelle (30) zur Eingangswelle (43) des Getriebegehäuses (40) antriebsverbunden ist,
**dadurch gekennzeichnet,**
daß in dem Vorschaltgetriebe (30) zumindest ein Kegeltrieb (50) mit Winkelversatz angeordnet ist.

2. Antriebssystem nach Anspruch 1,
**dadurch gekennzeichnet,**
daß zwischen Zapfwelle (24) und Vorschaltgetriebe (30) zumindest eine zusätzliche Gelenkwelle (28) angeordnet ist.

3. Antriebssystem nach Anspruch 1 oder 2,
**dadurch gekennzeichnet,**
daß eine Abtriebswelle des Vorschaltgetriebes (30) mit einer Antriebswelle einer Hydraulikpumpe antriebsverbunden ist oder beide Funktionen durch eine Eingangswelle des Vorschaltgetriebes (30) erfüllt sind und zumindest eine Abschaltkupplung (44) des Antriebssystems dem Vorschaltgetriebe (30) nachgeordnet ist.

4. Antriebssystem nach einem oder mehreren der Ansprüche 1 bis 3,
**dadurch gekennzeichnet,**
daß das Vorschaltgetriebe (30) über mehr als einen Gang verfügt.

5. Antriebssystem nach Anspruch 4,
**dadurch gekennzeichnet,**
daß zumindest einer der Gänge die Gelenkwelle (36) in anderer Richtung dreht als einer oder mehrere andere Gänge.

6. Antriebssystem nach einem oder mehreren der Ansprüche 1 bis 5,
**dadurch gekennzeichnet,**
daß im Vorschaltgetriebe (30) zumindest eine Übersetzung vorhanden ist, die bei einer Drehzahl der Zapfwelle (24) von 1.000 U/min. eine Drehzahl der Gelenkwelle (36) von über 1.000 U/min. ermöglicht.

7. Antriebssystem nach einem oder mehreren der Ansprüche 1 bis 6,
**dadurch gekennzeichnet,**
daß im Vorschaltgetriebe (30) zumindest eine Übersetzung vorhanden ist, die bei einer Drehzahl der Zapfwelle (24) von 1.000 U/min. eine Drehzahl der Gelenkwelle (36) von unter 1.000 U/min. ermöglicht.

8. Antriebssystem nach einem oder mehreren der Ansprüche 1 bis 7,
**dadurch gekennzeichnet,**
daß im Vorschaltgetriebe (30) ein Planetengetriebe (68) angeordnet ist.

9. Antriebssystem nach einem oder mehreren der Ansprüche 1 bis 8,
**dadurch gekennzeichnet,**
daß das Vorschaltgetriebe (30) über eine mechanische, elektronische oder hydraulische Betätigungsvorrichtung oder einer Kombination der Betätigungsmittel von Ferne aus schaltbar ist.

10. Antriebssystem nach einem oder mehreren der Ansprüche 3 bis 9,
**dadurch gekennzeichnet,**
daß anstelle des Kegeltriebes (50) mit Winkelversatz im Vorschaltgetriebe (30) ein Stirnradgetriebe oder ein Stirnradschaltgetriebe vorgesehen ist.

11. Antriebssystem nach Anspruch 10,
**dadurch gekennzeichnet,**
daß eine Hydraulikpumpe (42) über eine zusätzliche Zahnradstufe oder eine Verlängerung einer der Wellen des Vorschaltgetriebes angetrieben ist.

12. Antriebssystem nach einem oder mehreren der Ansprüche 1 bis 11,
**dadurch gekennzeichnet,**
daß das Vorschaltgetriebe (30) lösbar im Antriebsstrang angeordnet ist.

## Claims

1. A drive system for an agricultural big bale press comprising a device for picking up crop material from the ground, a device for further transporting the crop material to a pressing chamber, a pressing chamber, a binding device and a discharge device for discharge of the bale in the finished bound condition, wherein the drive system has a transmission housing (40) whose input side can be connected by way of a shaft to a power take-off shaft (25) and whose outputs are drivingly connected to working components of the big bale press, in the drive train of which between the power take-off shaft of the tractor and an input shaft (43) into the transmission housing (40) of the big bale press is arranged a series-connected transmission which is drivingly connected at the input side to the power take-off shaft and on the output side to a universal-joint shaft (36) with respect to the input shaft (43) of the transmission housing (40), characterised in that disposed in the series-connected transmission (30) is at least one bevel drive unit (50) with angular displacement.

2. A drive system according to claim 1 characterised in that at least one additional universal-joint shaft (28) is arranged between the power take-off shaft (24) and the series-connected transmission (30).

3. A drive system according to claim 1 or claim 2 characterised in that a drive output shaft of the series-connected transmission (30) is drivingly connected to a drive shaft of a hydraulic pump or both functions are performed by an input shaft of the series-connected transmission (30) and at least one disengagement coupling (44) of the drive system is arranged downstream of the series-connected transmission (30).

4. A drive system according to one or more of claims 1 to 3 characterised in that the series-connected transmission (30) has more than one speed.

5. A drive system according to claim 4 characterised in that at least one of the speeds rotates the universal-joint shaft (36) in a different direction from one or more other speeds.

6. A drive system according to one or more of claims 1 to 5 characterised in that provided in the series-connected transmission (30) is at least one transmission means which at a speed of rotation of the power take-off shaft (24) of 1000 rpm permits a speed of rotation of the universal-joint shaft (36) of over 1000 rpm.

7. A drive system according to one or more of claims 1 to 6 characterised in that provided in the series-connected transmission (30) is at least one transmission means which at a speed of rotation of the power take-off shaft (24) of 1000 rpm permits a speed of rotation of the universal-joint shaft (36) of below 1000 rpm.

8. A drive system according to one or more of claims 1 to 7 characterised in that a planetary transmission (68) is disposed in the series-connected transmission (30).

9. A drive system according to one or more of claims 1 to 8 characterised in that the series-connected transmission (30) is remotely shiftable by way of a mechanical, electronic or hydraulic actuating device or a combination of the actuating means.

10. A drive system according to one or more of claims 3 to 9 characterised in that a spur gear transmission or a spur gear shift transmission is provided instead of the bevel drive unit (50) with angular displacement in the series-connected transmission (30).

11. A drive system according to claim 10 characterised in that a hydraulic pump (42) is driven by way of an additional gear stage or an extension of one of the shafts of the series-connected transmission.

12. A drive system according to one or more of claims 1 to 11 characterised in that the series-connected transmission (30) is arranged releasably in the drive train.

## Revendications

1. Système d'entraînement pour une presse agricole à grosses balles, comportant un dispositif pour le ramassage de produit récolté sur le champ, un dispositif pour acheminer le produit récolté jusqu'à une chambre de pressage, une chambre de pressage, un dispositif de liage ainsi qu'un dispositif d'éjection pour l'éjection de la balle terminée, liée,le système d'entraînement comprenant un carter de transmission (40), dont l'entrée peut être reliée à un arbre de prise de force (25) par l'intermédiaire d'un arbre et dont les sorties sont liées sur le plan de l'entraînement à des composants actifs de la presse à grosses balles, une boîte auxiliaire étant disposée dans la chaîne de transmission, entre l'arbre de prise de force du tracteur et un arbre d'entrée (43), à l'intérieur du carter de transmission (40) de la presse à grosses balles, laquelle boîte intermédiaire est reliée sur le plan de l'entraînement, côté entrée, à l'arbre de prise de force, et côté sortie par un arbre articulé (36), à l'arbre d'entrée (43) du carter de transmission (40), caractérisé en ce qu'au moins un train d'engrenages coniques (50) à décalage angulaire est disposé dans la boîte auxiliaire (30).

2. Système d'entraînement selon la revendication 1, caractérisé en ce qu'au moins un arbre articulé (28) supplémentaire est disposé entre l'arbre de prise de force (24) et la boîte auxiliaire (30).

3. Système d'entraînement selon la revendication 1 ou 2, caractérisé en ce qu'un arbre de sortie de la boîte auxiliaire (30) est relié sur le plan de l'entraînement à un arbre d'entraînement d'une pompe hydraulique ou que les deux fonctions sont remplies par un arbre d'entrée de la boîte auxiliaire (30) et qu'au moins un accouplement débrayable (44) du système d'entraînement est disposé derrière la boîte auxiliaire (30).

4. Système d'entraînement selon une ou plusieurs des revendications 1 à 3, caractérisé en ce que la boîte auxiliaire (30) dispose de plus d'un rapport.

5. Système d'entraînement selon la revendication 4, caractérisé en ce qu'au moins un des rapports de la boîte auxiliaire (30) tourne dans un sens différent d'un ou de plusieurs autres rapports.

6. Système d'entraînement selon une ou plusieurs des revendications 1 à 5, caractérisé en ce que la boîte auxiliaire (30) comporte au moins une démultiplication qui, pour une vitesse de rotation de l'arbre de prise de force (24) de 1000 tr/min, permet d'obtenir une vitesse de rotation de l'arbre articulé (36) supérieure à 1000 tr/min.

7. Système d'entraînement selon une ou plusieurs des revendications 1 à 5, caractérisé en ce que la boîte auxiliaire (30) comporte au moins une démultiplication qui, pour une vitesse de rotation de l'arbre de prise de force (24) de 1000 tr/min, permet d'obtenir une vitesse de rotation de l'arbre articulé (36) inférieure à 1000 tr/min.

8. Système d'entraînement selon une ou plusieurs des revendications 1 à 7, caractérisé en ce qu'un engrenage planétaire (68) est disposé dans la boîte auxiliaire (30).

9. Système d'entraînement selon une ou plusieurs des revendications 1 à 8, caractérisé en ce que la boîte auxiliaire (30) peut être commandée à distance par l'intermédiaire d'un mécanisme d'actionnement mécanique ou hydraulique ou par une combinaison des moyens d'actionnement.

10. Système d'entraînement selon une ou plusieurs des revendications 3 à 9, caractérisé en ce qu'il est prévu dans la boîte auxiliaire (30) un engrenage à roues droites ou un changement de vitesses à roues droites à la place du train d'engrenages coniques (50) à décalage angulaire.

11. Système d'entraînement selon la revendication 10, caractérisé en ce qu'une pompe hydraulique (42) est entraînée par un étage de roues dentées supplémentaire ou par un prolongement de l'un des arbres de la boîte auxiliaire (30).

12. Système d'entraînement selon une ou plusieurs des revendications 1 à 11, caractérisé en ce que la boîte auxiliaire (30) est insérée de manière démontable dans la chaîne de transmission.
